# EUROPÄISCHE PATENTSCHRIFT

(11) **EP 1 574 396 B1**
(45) Veröffentlichungstag und Bekanntmachung des Hinweises auf die Patenterteilung: **06.08.2014**
(21) Anmeldenummer: 05002069.2
(22) Anmeldetag: 01.02.2005
(51) Int. Cl.: B60R 16/02

(54) **Fertigungs-Verfahren für Kraftfahrzeuge**
Process for the manufacture for vehicles
Procédé de fabrication pour véhicules

(30) Priorität: 09.03.2004 DE 102004011289
(43) Veröffentlichungstag der Anmeldung: 14.09.2005
(73) Patentinhaber: Bayerische Motoren Werke Aktiengesellschaft, 80809 München (DE)
(72) Erfinder: Pollmann, Arnold, 80337 München (DE); Gelfert, Rene, 01744 Dippoldiswalde (DE); Mueller, Marcus, 81375 München (DE)

(56) Entgegenhaltungen:
- DE-A1- 4 344 866
- DE-A1- 10 212 778

## Beschreibung

Die Erfindung bezieht sich auf ein allgemein bekanntes Fertigungs-Verfahren für Kraftfahrzeuge, bei dem während eines Montageprozesses an aufeinanderfolgenden Montagestationen elektronische Einheiten verbaut werden. Bei diesen Einheiten handelt es sich um Steuergeräte und/oder Baugruppen.

Während der Fertigung von Fahrzeugen werden üblicherweise diese Einheiten teilweise an separaten Vormontageplätzen programmiert, d.h. mit Programmen und/oder Daten für den Einsatz im zugeordneten Fahrzeug versehen. Alternativ wird einer von mehreren bereits in den Steuergerät/den Baugruppen vorhandenen Programm- und Datensätzen ausgewählt (sog. Variantencodierung). Bedingt durch häufig auftretende elektromagnetische Störungen ist es in der Regel nicht oder nur sehr eingeschränkt möglich, innerhalb der Montagelinie Programme- und/oder Daten beispielsweise drahtlos in das Fahrzeug einzuspielen.

Das übliche Verfahren ist auf Grund der Mehrzahl von Programmierplätzen, die in der Regel unkoordiniert ihre Programmieraufgaben durchführen, störanfällig. Da an den Programmierplätzen im Allgemeinen nicht sequenzparallel zur Montagelinie gearbeitet wird, sind Aufwände zur Re-Sequenzierung und zur sequenzgenauen Zusteuerung der bereits programmierten Einheiten zur Montagelinie erforderlich. Die Bandendeprogrammierung ist zeitaufwändig und verlangsamt den Produktionsfluss. Zudem können Fehler, die während der zahlreichen Programmiervorgänge auftreten, nur schwer und in der Regel erst nachträglich am Bandende erkannt werden.

In der DE 43 44 866 A1 ist ein Verfahren zur Programmierung eines Steuergeräts beschrieben, das beispielsweise am Bandende bei der Produktion eines das Steuergerät enthaltenden Kraftfahrzeugs ausgeführt wird. Dazu ist ein Programmiergerät vorgesehen, das über eine serielle Übertragungsleitung mit dem Steuergerät verbunden wird. Zu programmierende Daten werden dabei über die Übertragungsleitung vom Programmiergerät in das Steuergerät übertragen.

Der Erfindung liegt die Aufgabe zu Grunde, ein Verfahren der eingangs genannten Art zu schaffen, das eine prozesssichere - und schnelle Programmierung und Datenbefüllung der elektronischen Einheiten während des Fertigungs-Verfahrens ermöglicht.

Die Erfindung löst diese Aufgabe mit den Merkmalen des Patentanspruchs 1.

Das Besondere der Erfindung ist die Programmierung/Datenbefüllung der Einheiten in der Montagelinie. Damit lassen sich auch große Datenmengen sicher und zuverlässig ins Fahrzeug bringen. Die Programme/Daten werden aus dem mobilen Computer entnommen, der im oder am Fahrzeug sitzt und mit diesem mitbewegt wird. Die Programme und Daten werden nach dem Einbau der Einheiten durch den Computer gesteuert in die Steuergeräte/Baugruppen verteilt.

Eine besondere Ausgestaltung der Erfindung beschäftigt sich mit der zusätzlichen Aufgabe, die während der Montage sukzessive im Fahrzeug verbauten Einheiten zu initialisieren und zu prüfen. Wie im Patentanspruch 2 angegeben, werden hierzu Initialisierung- und Prüfschritte für die Einheiten nach dem Einbau dieser Einheiten durchgeführt. Die zugehörigen Initialisierungs- und Prüfinformationen werden zusammen mit den fahrzeugindividuellen Programmen und/oder Daten vorbereitend in den Computer geladen. Damit lassen sich bisher nicht für diesen Zweck nutzbare Bandbereiche für die Programmierung, Datenbefüllung, Initialisierung und Prüfung nutzen bzw. auch effizienter nutzen. Auch mit großen Datenvolumina/Datenaufkommen können Initialisierungs- und Prüfvorgänge des Fahrzeuges in der Montagelinie kontinuierlich durchgeführt werden.

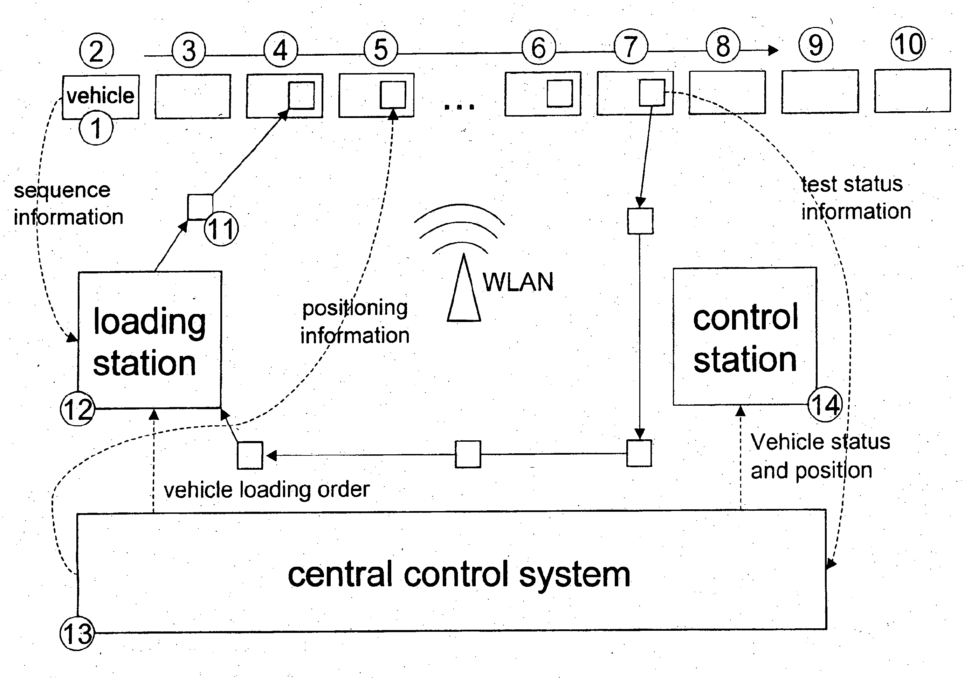

Weitere vorteilhafte Ausgestaltungen der Erfindung sind in den weiteren Patentansprüchen angegeben und werden im Folgenden an Hand eines in der Zeichnung wiedergegebenen Ausführungsbeispiels näher erläutert. Die einzige Figur zeigt vereinfacht einen Ausschnitt aus einer Montagelinie für Fahrzeuge.

Ein Fahrzeug 1 durchläuft in der mit "production line" bezeichneten Montagelinie nacheinander eine Reihe von Montageplätzen, die mit 2-10 bezeichnet sind. Dabei werden an zwei Montageplätzen 5 und 6, bei denen es sich um einen großen Teil der Montagelinie inklusive sogenannter Techniktakte handelt, alle elektronischen Einheiten (nicht dargestellt) verbaut. Unter Techniktakte sind Umsetzer, Rückführungsgehänge, und ähnliche Bereiche zu verstehen, die für das Montagepersonal in der Regel nicht nutzbar sind. Am vorhergehenden Montageplatz 4 wird ein mobiler Computer 11 in das Fahrzeug eingebaut.

Der Computer 11 enthält die für die Montage eines Fahrzeuges notwendigen Informationen (Steuergeräte-Programme und -Daten, Codierdaten, Freischaltdaten, Fahrzeugauftragsdaten, Inbetriebnahmereihenfolge ...) und optional auch Tools (Programmiertools, Codiertools, ...). Diese Daten und Tools werden in einer Ladestation 12 auf Basis von durch ein Leitsystem 13 bereitgestellten Informationen in den Computer 11 eingebracht. Alternativ können sie dem Computer auch durch einen tauschbaren und entsprechend vorgeladenen Massenspeicher zugeführt werden. Das Vorladen der Massenspeicher kann dabei analog der Arbeitsweise der Ladestation 12 erfolgen.

Liegen alle Varianten der Einheiten in diesen bereits vor, können diese über eine Schnittstelle auf einen Auftrag hin parametriert werden (nicht dargestellt). Die Inbetriebnahmereihenfolge wird z.B. aus einem "Prüfplan" zusammen mit Regeln und Restriktionen aus der jeweiligen Werksstruktur und dem Fahrzeugauftrag generiert.

Sobald der Computer 11 in das Fahrzeug eingebracht ist, wird eine elektrische Verbindung zu einer Diagnoseschnittstelle des Fahrzeugs 1 hergestellt. Dadurch wird der Computer 11 mit Strom versorgt und beginnt mit seiner Arbeit, indem er die Programmierung sowie die Prüfungs- und Inbetriebnahmesequenzen (automatisch und autark) ausführt.

Der Computer 11 fährt mit dem Fahrzeug entlang der Produktionslinie. Alle für die Programmierung und Daten-Beladung der an den Montageplätzen 5 und 6 eingebauten elektronischen Einheiten erforderlichen Daten und Tools sind im Computer 11 vorhanden und werden bedarfsgerecht eingesetzt und/oder vom Computer 11 an diese Einheiten überspielt.

Nach Beendigung von (Teil-)Prüfungen sendet der Computer 11 Status-Informationen der Prüfungen an das Leitsystem 13.

Der Computer 11 wird am anschließenden Montageplatz 7 wieder aus dem Fahrzeug 1 entfernt und zurück zur Ladestation 12 gebracht. Dort wird er mit den Daten/Programmen usw. für ein nächstes Fahrzeug beladen, welches analog dem oben beschriebenen Prozess behandelt wird. Optional können weitere Informationen über die Inbetriebnahme des vorangegangenen Fahrzeuges, die bisher noch nicht erfasst wurden, ausgelesen und gesichert werden.

Der Computer 11 kann zusätzlich Handlungsanweisungen auf einem integrierten Display oder auch per drahtloser Bildübertragung auf neben der Montagelinie stehende Monitore für die Werker visualisieren (nicht dargestellt) und auch Quittierungen von Werker-Handlungen entgegennehmen (direkt auf dem Display, z.B. per Touchscreen oder über separate Tasten, die auch Tasten des Fahrzeuges sein können) (ebenfalls nicht gezeigt).

Der Computer 11 kann Rückmeldungen über den Ablauf und den Erfolg der durchgeführten Beschaltungen an das Leitsystem 13 senden. Durch die Intelligenz des Computers 11 ist der erforderliche Datenaustausch zum Leitsystem 13 minimal. Hierdurch werden die Anforderungen an eine Infrastruktur zur drahtlosen Datenübertragung minimiert. Diese Schnittstelle gewährleistet auch die Dokumentation von z.B. dokumentationspflichtigen Daten.

Kontrollstationen 14 liefern auf Basis der Informationen des Leitsystems an beliebiger Stelle und beliebig gefiltert Informationen über den Status der Fahrzeuge in der Montagelinie.

### Zusammengefasst ergeben sich die Vorteile der Erfindung wie folgt:

Der Computer 11 kann die Fahrzeuge selbständig in Betrieb nehmen (konfigurieren, prüfen, Montagefortschritt anzeigen). Er erkennt den Montagefortschritt und startet die erforderliche Konfigurations- und Prüfroutinen. Er meldet Fehler sofort oder zu bestimmten Positionen in der Montagelinie an das Leitsystem 13, so dass ggf. eine Nacharbeit unter Einsatz der erforderlichen Ersatzteile/Messgeräte zur Fehlerbehebung frühestmöglich durchgeführt werden kann. Bei geeigneter drahtloser Infrastruktur (bei WLAN in Form eines dichten Netzwerks von Access-Points) kann der Computer 11 auch zur Fahrzeugverfolgung eingesetzt werden. In diesem Fall kann die Kontrollstation 14 auch für die exakte Darstellung der Fahrzeugposition verwendet werden.

## Patentansprüche

1. Fertigungs-Verfahren für Kraftfahrzeuge, bei dem während eines Montageprozesses an aufeinanderfolgenden Montagestationen (3...10) elektronische Einheiten verbaut werden, **dadurch gekennzeichnet, dass** die Einheiten während des Montageprozesses mit fahrzeugindividuellen Programmen und/oder Daten versehen werden, dass die Programme und Daten aus einem mobilen Computer (11) entnommen werden, der vorbereitend mit diesen Programmen und Daten für ein Fahrzeug (1) geladen und anschließend in das Fahrzeug (1) gebracht wird und aus dem diese Programme und Daten nach dem Einbau der Einheiten durch den Computer (11) gesteuert ausgelesen und an den Montagestationen (3...10) bedarfsgerecht in die elektronischen Einheiten überspielt werden.

2. Verfahren nach Anspruch 1, **dadurch gekennzeichnet, dass** Initialisierungs- und Prüfschritte für die Einheiten nach dem Einbau dieser Einheiten durchgeführt werden, deren Initialisierungs- und Prüfinformationen zusammen mit den fahrzeugindividuellen Programmen und/oder Daten vorbereitend in den Computer (11) geladen werden.

3. Verfahren nach Anspruch 1 oder 2, **dadurch gekennzeichnet, dass** im Computer (11) Kontrolldaten für den vom Computer (11) durchgeführten Transfer von Daten und/oder Programmen bzw. für die vom Computer (11) durchgeführten Initialisierung- und Prüfschritte gespeichert werden.

4. Verfahren nach Anspruch 3, **dadurch gekennzeichnet, dass** der Computer (11) anschließend aus dem Fahrzeug (1) entnommen und die darin gespeicherten Kontrolldaten ausgelesen werden.

5. Verfahren nach einem der Ansprüche 1 bis 4, **dadurch gekennzeichnet, dass** der Computer (11) anschließend mit den Daten und Programmen sowie Initialisierungs- Prüfinformationen eines nächsten Fahrzeugs (1) geladen wird und das nächste Fahrzeug (1) gemäß einem analogen Prozess zu dem Fahrzeug (1) behandelt wird.

6. Verfahren nach einem der Ansprüche 1 bis 5, **dadurch gekennzeichnet, dass** der mobile Computer (11) während des Montageprozesses mit dem Bordnetz des Fahrzeugs (1) verbunden wird.

7. Verfahren nach Anspruch 6, **dadurch gekennzeichnet, dass** der mobile Computer (11) an eine Diagnosesteckdose angeschlossen wird.

8. Verfahren nach einem der Ansprüche 1 bis 7, **dadurch gekennzeichnet, dass** bei einem Fehler ein Warnsignal ausgegeben wird.

9. Verfahren nach Anspruch 8, **dadurch gekennzeichnet, dass** ein Fehlersignal an ein Leitsystem (13) weitergeleitet wird.

10. Verfahren nach einem der Ansprüche 1 bis 4, **dadurch gekennzeichnet, dass** der Ablauf des Fertigungs-Verfahrens protokolliert wird und mit einem Soll-Ablauf verglichen wird.

## Claims

1. A manufacturing method for motor vehicles, in which electronic units are installed during an assembly process at consecutive assembly stations (3...10), **characterised in that** the units are provided with programs and/or.data particular to the vehicle during the assembly process, **in that** the programs and data are taken from a mobile computer (11), which is loaded in preparation with these programs and data for a vehicle (1) and then brought into the vehicle (1) and from which these programs and data are read out, controlled by the computer (11), after the installation of the units and transferred as required to the electronic units at the assembly stations (3...10).

2. A method according to claim 1, **characterised in that** initialisation and testing steps for the units are carried out after the installation of these units, the initialisation and testing information of which, together with the programs and/or data particular to the vehicle, are loaded in preparation into the computer (11).

3. A method according to claim 1 or 2, **characterised in that** the control data for the transfer of data and/or programs carried out by the computer (11) or initialisation and testing steps carried out by the computer (11) are stored in the computer (11).

4. A method according to claim 3, **characterised in that** the computer (11) is then taken out of the vehicle (1) and the control data stored therein are read out:

5. A method according to any one of claims 1 to 4, **characterised in that** the computer (11) is then loaded with the data and programs and initialisation and test information of a next vehicle (1) and the next vehicle (1) is treated according to an analogous process to the vehicle (1).

6. A method according to any one of claims 1 to 5, **characterised in that** the mobile computer (11) is connected to the electrical system of the vehicle (1) during the assembly process.

7. A method according to claim 6, **characterised in that** the mobile computer (11) is connected to a diagnostic socket.

8. A method according to any one of claims 1 to 7, **characterised in that** an alarm signal is emitted in the event of a fault.

9. A method according to claim 8, **characterised in that** a fault signal is passed to a control system (13).

10. A method according to any one of claims 1 to 4, **characterised in that** the course of the manufacturing method is recorded and compared with a desired course.

## Revendications

1. Procédé de fabrication de véhicules selon lequel pendant un processus de montage, des unités électroniques sont montées sur des postes de montage successifs (3, 10),
**caractérisé en ce que**
pendant le processus de montage, les unités sont équipées de programmes et/ou de données propres au véhicule, les programmes et les données sont prélevés d'un calculateur mobile (11) qui est préalablement chargé avec ces programmes et données pour un véhicule (1) puis est transféré dans le véhicule (1), et, duquel ces programmes et données sont extraits de façon commandée après le montage des unités par le calculateur (11) et sont réenregistrés au niveau des postes de montage (3, 10) dans les unités électroniques de manière adaptée à la demande.

2. Procédé conforme à la revendication 1,
**caractérisé en ce qu'**
après le montage des unités on met en oeuvre des étapes d'initialisation et de vérification de ces unités, dont les informations d'initialisation et de vérification sont chargées préalablement dans le calculateur (11) avec les programmes et/ou les données propres au véhicule.

3. Procédé conforme à la revendication 1 ou 2,
**caractérisé en ce que**
dans le calculateur (11) sont enregistrées des données de contrôle pour le transfert de données et/ou de programmes mis en oeuvre par le calculateur (11) ou pour les étapes d'initialisation et de vérification mises en oeuvre par le calculateur (11).

4. Procédé conforme à la revendication 3,
**caractérisé en ce que**
le calculateur (11) est ensuite prélevé du véhicule (1) et les données de contrôle qui y sont enregistrées sont extraites.

5. Procédé conforme à l'une des revendications 1 à 4,
**caractérisé en ce que**
le calculateur (11) est ensuite chargé avec les données et programmes ainsi que les informations d'initialisation et de vérification d'un véhicule suivant, et le véhicule suivant (1) est traité selon un processus analogue à celui du véhicule précédent (1).

6. Procédé conforme à l'une des revendications 1 à 5,
**caractérisé en ce que**
le calculateur mobile (11) est relié au réseau embarqué du véhicule (1) pendant le procédé de montage.

7. Procédé conforme à la revendication 6,
**caractérisé en ce que**
le calculateur mobile (11) est relié à une fiche femelle de diagnostic.

8. Procédé conforme à l'une des revendications 1 à 7,
**caractérisé en ce qu'**
en cas de défaut un signal d'avertissement est émis.

9. Procédé conforme à la revendication 8,
**caractérisé en ce qu'**
un signal de défaut est transmis à un système de guidage (13).

10. Procédé conforme à l'une des revendications 1 à 4,
**caractérisé en ce que**
le déroulement du procédé de fabrication est soumis à un protocole et est comparé à un déroulement de consigne.
